Europäisches Patentamt

European Patent Office

Office européen des brevets

(19)

(11) Numéro de publication: **0 035 486**
.B1

(12) **FASCICULE DE BREVET EUROPEEN**

(45) Date de publication du fascicule du brevet:
13.11.85

(21) Numéro de dépôt: **81870014.8**

(22) Date de dépôt: **02.03.81**

(51) Int. Cl.⁴: **F 24 D 11/00,** F 24 D 13/04,
F 24 H 1/20, F 24 D 19/10,
G 05 D 23/13

(54) **Installation de chauffage par accumulation de chaleur.**

(30) Priorité: **29.02.80 EP 80200180**

(43) Date de publication de la demande:
**09.09.81 Bulletin 81/36**

(45) Mention de la délivrance du brevet:
**13.11.85 Bulletin 85/46**

(84) Etats contractants désignés:
**AT BE CH DE FR LI**

(56) Documents cités:
**DE - A - 1 914 733
DE - A - 2 021 579
DE - B - 2 427 641**

(73) Titulaire: **ATELIERS DE CONSTRUCTIONS
ELECTRIQUES DE CHARLEROI (ACEC) Société
Anonyme, Avenue Lloyd George 7, B-1050 Bruxelles (BE)**

(72) Inventeur: **Andre, Jacques, 149, Chaussée de Louvain,
B-1410 Waterloo.(BE)**

BUNDESDRUCKEREI BERLIN

## Description

Les installations de chauffage comprenant un circuit de radiateurs sont alimentées par des générateurs de chaleur à combustibles solides, liquides ou gazeux.

Ces installations de chauffage ont généralement, dans leur conception moderne, un faible volant d'inertie thermique et le maintien des radiateurs à une température constante demande une mise en marche fréquente des générateurs thermiques pour des périodes de fonctionnement de courte durée. Cette succession de mises en marche entraîne un mauvais rendement des générateurs thermiques travaillant presque toujours en phase de démarrage et les chocs thermique successifs sollicitent sévèrement ces installations et les fatiguent prématurément.

Le document DE-B-2 427 641 décrit une installation dont le circuit de radiateurs est alimenté par de grands réservoirs d'eau chaude et qui comporte une vanne à trois voies, des pompes et des aquastats reliés à un dispositif de réglage dont le rôle est d'éviter les alternances de coupures et d'injection d'eau très chaude dans le circuit.

La présente invention remédie aux inconvénients précités et se fixe comme but supplémentaire de répondre au souci de plus en plus préoccupant de réaliser des économies d'énergie.

Le but de l'invention est réalisé par une installation telle que définie dans les revendications 1 et 9. Des modes de réalisation préférés font l'objet des revendications dépendantes.

L'invention est exposée plus en détails à l'aide des figures 1, 2, 3, 4, 5, 6 et 7 qui établissent la comparaison entre des installations classiques et celles revendiquées dans l'invention.

Les figures 1 et 2 schématisent des installations classiques.

Les figures 3, 4, 5, 6 et l7 schématisent des installations suivant l'invention.

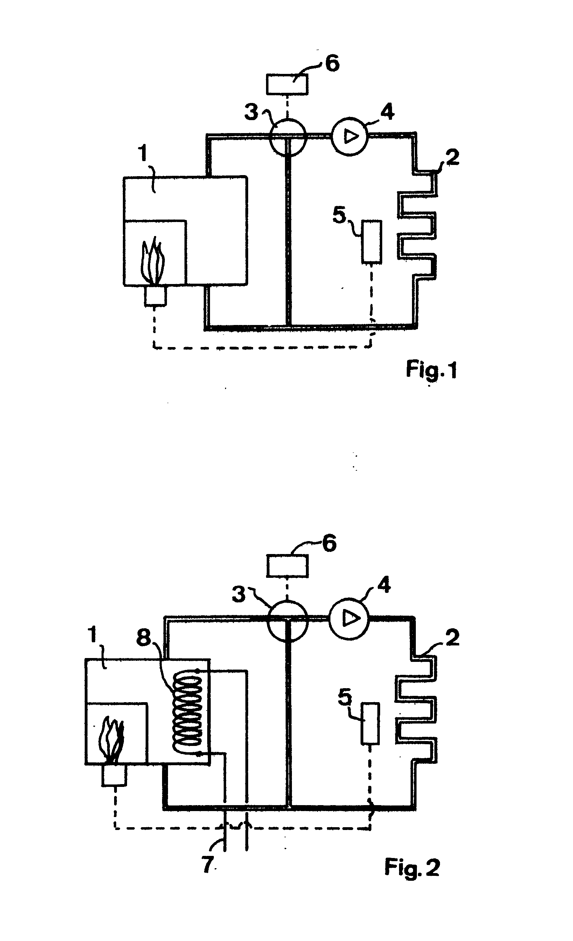

Dans la figure 1, un générateur thermique classique, par exemple une chaudière (1) est branchée sur un circuit de radiateurs (2) par l'intermédiaire d'une vanne à trois voies (3). Cette installation comprend un circulateur (4), un thermostat d'ambiance (5) qui, selon les besoins du circuit de radiateurs (2) commande la mise en route ou l'arrêt du générateur thermique (1) et un thermostat extérieur (6) qui commande une vanne à trois voies (3) pour faire varier, en fonction de la température extérieure, les proportions d'eau chaude sortant du générateur thermique (1) et d'eau tiède revenant directement du circuit de radiateurs (2). La figure 2 fait apparaître, en plus de l'installation décrite ci-dessus, un circuit sanitaire (7) alimenté par un échangeur de chaleur (8).

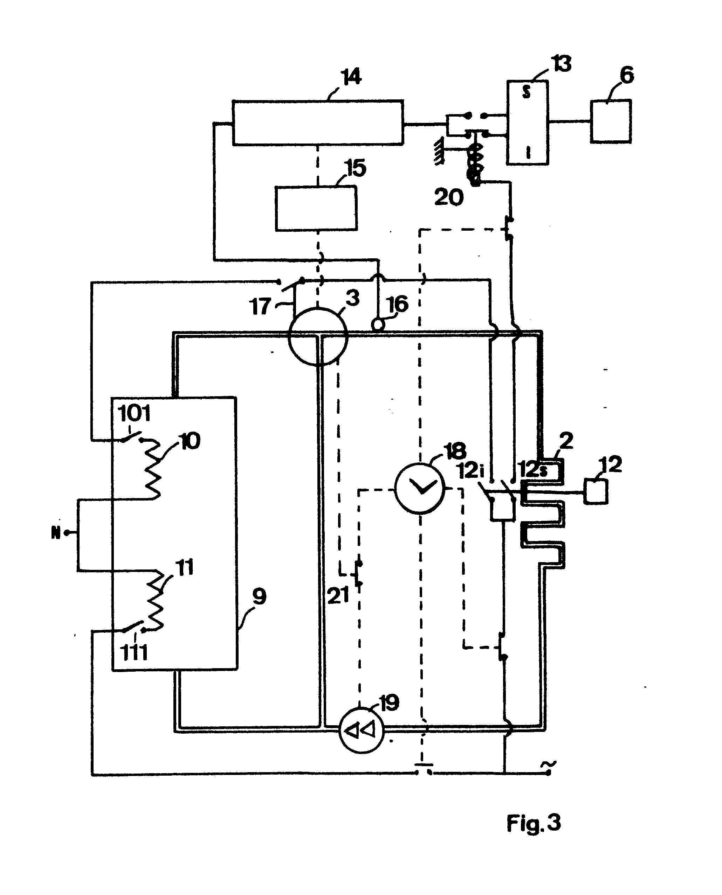

La figure 3 représente schématiquement une installation de chauffage par accumulation de chaleur dans un réservoir d'eau, isolé, constituée d'un chauffe-eau (9) équipé à sa partie supérieure d'une résistance électrique (10) et à sa partie inférieure d'une autre résistance électrique (11). Ce chauffe-eau (9) alimente un circuit de radiateurs (2) par l'intermédiaire d'une vanne à trois voies (3) modulée par un thermostat extérieur (6) et pilotée par un thermostat d'ambiance (12).

Dans l'installation suivant l'invention, la vanne à trois voies (3) est commandée, à la fois, par un thermostat extérieur (6) faisant office de régulateur et par un thermostat d'ambiance (12) qui affine le réglage du régulateur.

Dans l'exemple de réalisation repris à la figure 3, le thermostat extérieur (6) commande la vanne à trois voies (3), en agissant sur l'ouverture de la vanne d'eau chaude en provenance du chauffe-eau (9), par l'intermédiaire d'un ensemble de régulation comprenant un générateur de fonction (13), un comparateur (14) et un moteur (15).

Le générateur de fonction (13) engendre une double relation linéaire entre la température extérieure enregistrée par le thermostat extérieur (6) et une température de consigne pour l'eau à la sortie de la vanne à trois voies (3). A la sortie de la vanne à trois voies (3), la température de l'eau est mesurée par un thermomètre (16).

Une première relation linéaire, dite relation linéaire supérieure (13s), correspond au régime supérieur de la vanne à trois voies (3), c'est-à-dire au régime pour lequel l'ouverture de la dite vanne d'eau chaude de la vanne à trois voies (3) peut être totale.

Une seconde relation linéaire, dite relation linéaire inférieure, correspond au régime inférieur de la vanne à trois voies (3), c'est-à-dire au régime pour lequel l'ouverture de la dite vanne d'eau chaude peut être réduite complètement.

Un thermostat d'ambiance (12) placé dans un local témoin, choisit par l'intermédiaire d'un commutateur (20) la relation linéaire convenable du générateur de fonction (13).

Par l'action combinée du thermostat extérieur (6) et du thermostat d'ambiance (12), il résulte une température de consigne qui est introduite dans un comparateur (14) pour être comparée avec la température mesurée à la sortie de la vanne à trois voies (3) par le thermomètre (16). Le comparateur (14) agit sur la vanne à trois voies (3) par l'intermédiaire du moteur (15).

En adaptant automatiquement la température de l'eau circulant dans le circuit des radiateurs (2) en fonction de la température extérieure, cet ensemble de régulation joue un rôle économique important en réalisant une économie sensible d'énergie sans sacrifier le confort de l'habitation.

Le thermostat d'ambiance (12) comporte deux étages de températures de consigne, distants l'un de l'autre d'un degré centigrade ou plus, selon les caractéristiques recherchées pour l'installation. Ces deux étages de températures de consigne déterminent trois zones de températures et approprient la commande de la vanne à trois voies (3) en fonction de la zone de température dans laquelle se trouve la température du local témoin.

Une première zone de température correspond à des températures plus élevées que celle qui est affichée à l'étage supérieur des températures de consigne du thermostat d'ambiance (12).

Dans ce cas, les contacts électriques inférieur (12i) et supérieur (12s) du thermostat d'ambiance (12) sont ouverts et la proportion d'eau chaude fournie par le chauffe-eau (9) est réduite par la vanne d'arrivée d'eau chaude de la vanne à trois voies (3) qui se trouve ainsi en régime inférieur.

Une seconde zone de température correspond aux températures comprises entre les deux étages des températures de consigne du thermostat d'ambiance (12). Dans ce cas, le contact électrique inférieur (12i) du thermostat d'ambiance (12) est ouvert, le contact électrique supérieur (12s) du thermostat d'ambiance (12) est fermé et commande une plus grande ouverture de la vanne d'arrivée d'eau chaude de la vanne à trois voies (3) qui se trouve ainsi en régime supérieur.

Une troisième zone de température correspond à des températures inférieures à l'étage inférieur (12i) des températures de consigne du thermostat d'ambiance (12). Dans ce cas, le contact électrique supérieur (12s) du thermostat d'ambiance (12) erst fermé et maintient en régime supérieur la vanne à trois voies (3) dont la vanne d'arrivée d'eau chaude, lorsqu'elle arrive en position d'ouverture totale, ferme un interrupteur de fin de course (17), le contact électrique inférieur (12i) du thermostat d'ambiance (12) est fermé et permet, en concomitance avec la fermeture de l'interrupteur de fin de course (17) de la vanne à trois voies (3), la relance du chauffe-eau (9), en période de jour, par alimentation en énergie électrique de la résistance électrique (10) montée à la partie supérieure du chauffe-eau (9).

Cette alimentation est conditionnée par un limiteur de témpérature (101) dont le rôle est d'ouvrir le circuit d'alimentation lorsque la température des couches supérieures de l'eau contenue dans le chauffe-eau (9) dépassse une température de référence. Dans le cas où la température relevée par le thermostat d'ambiance (12) se situe dans le troisième zone de température, c'est-à-dire lorsque la température du local témoin est inférieure à celle de l'étage limite (12i), il est évident que le limiteur de température (101) est fermé et que, dès la fermeture de l'interrupteur de fin de course (17), la résistance (10) est alimentée en énergie électrique.

L'utilisation d'un thermostat d'ambiance à action proportionnelle entre deux limites bien déterminées peut remplacer utilement le thermostat à deux étages de température de consigne en supprimant l'oscillation de la température de l'eau autour d'une température de consigne. Une minuterie (18) est actionnée par des signaux de commande émis par les sociétés distributrices d'électricité pour passer du régime de jour au régime de nuit ou inversément. Dès le début de la période de nuit cette minuterie (18) met en petite vitesse un circulateur à deux vitesses (19), place la vanne à trois voies (3) en régime inférieur, met hors circuit le thermostat d'ambiance (12) et permet l'alimentation en énergie électrique de la résistance électrique (11) placée dans la partie inférieure du chauffe-eau (9).

Selon les caractéristiques propres de l'installation, la résistance électrique (10) située à la partie supérieure du chauffe-eau (9) peut être alimentée pendant tout ou partie de la période du régime de nuit.

De préférence, avant la fin de la période de nuit, par exemple une heure avant, la minuterie (18) met en grande vitesse le circulateur à deux vitesses (19), remet en circuit le thermostat d'ambiance (12) et met la vanne à trois voies (3) en régime supérieur. A la fin de la période de nuit, située généralement à 6 heures, la minuterie (18) coupe les résistances électriques (10 et 11) de leur alimentation en énergie électrique. Pendant la période de jour, selon les besoins du circuit de radiateurs (2) détectés par le thermostat d'ambiance (12) une quantité variable d'eau chaude issue du chauffe-eau (9) est admise dans le circuit des radiateurs (2) par l'intermédiaire de la vanne à trois voies (3). Lorsque la température du local témoin est trop élevée et dépasse l'étage supérieure des températures de consigne du thermostat d'ambiance (12) le contact électrique supérieur (12s) s'ouvre et le contacteur (20) branche le générateur de fonction (13) sur la relation linéaire correspondant au régime inférieur de la vanne à trois voies (3). Par comparaison entre la température ainsi consignée et la température mesurée par le thermomètre (16) placé à la sortie de la vanne à trois voies (3), le comparateur (14) commande le moteur (15) qui ferme progressivement l'ouverture de la vanne d'eau chaude de la vanne à trois voies (3). Il peut même arriver que pour des températures trop élevées, relevées à la sortie de la vanne à trois voies (3) par le thermomètre (16) la vanne d'eau chaude de la vanne à trois voies (3) soit complètement fermée et que le circulateur à deux vitesses (19) soit mis hors circuit par le contact (21).

Lorsque la température du local témoin se refroidit et descend en dessous de l'étage supérieur des températures de consigne du thermostat d'ambiance (12) le contact électrique supérieur (12s) du thermostat d'ambiance (12) se ferme, le contacteur (20) branche le générateur de fonction (13) sur la relation linéaire correspondant au régime supérieur de la vanne à trois voies (3). Par l'intermédiaire de l'ensemble de régulation, la vanne à trois voies (3) s'ouvre pour admettre une plus forte proportion d'eau chaude venant du chauffe-eau (9) et augmente ainsi la température de l'eau circulation dans le circuit de radiateurs. De ce fait, la température du local témoin augmente jusqu'à ce qu'elle dépasse à nouveau l'étage supérieur des températures de consigne du thermostat d'ambiance (12) et provoque une nouvelle ouverture du contact électrique (12s) entraînant à nouveau le processus de régulation exposé ci-dessous. Au fil des heures, l'eau chaude du chauffe-eau (9) s'épuise progressivement et il peut arriver que la température du local témoin descende sous l'étage inférieur des températures de consigne du thermostat d'ambiance (12) malgré une ouverture totale de la vanne d'eau chaude de la vanne à trois voies (3). Dès que la température du local témoin est inférieure à l'étage inférieur des températures de consigne du thermostat d'ambiance (12) le contact inférieur électrique (12i) du thermostat d'ambiance (12) se ferme et vient en concomitance avec la fermeture de l'interrupteur de fin de course (17) pour permettre l'alimentation en énergie électrique de la résistance (10) placée dans la partie supérieure du chauffe-eau (9), le limiteur de température (101) étant fermé.

De cette manière, seules les couches supérieures de la masse d'eau contenue dans le chauffe-eau (9) sont chauffées par la résistance électrique (10) réduisant ainsi au minimum l'appel d'énergie électrique pendant la période de jour.

En variante à la figure 3, on peut facilement concevoir une installation, non représentée, équipée d'un circuit sanitaire (6) alimenté au départ d'un échangeur (8) placé à l'intérieur du chauffe-eau (9).

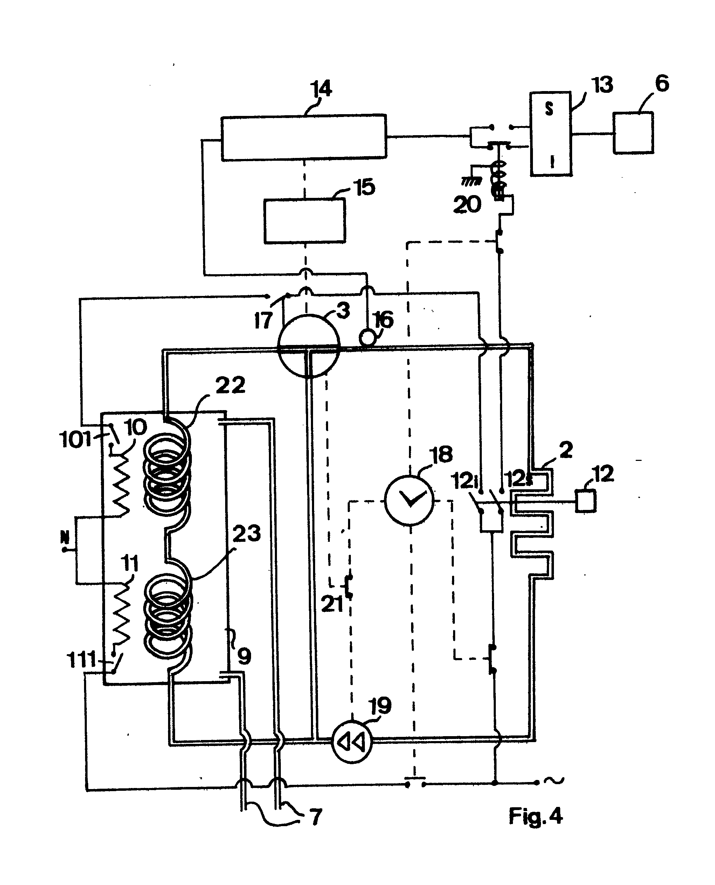

La figure 4 représente un chauffe-eau (9) équipé de deux échangeurs (22 et 23) qui alimentent le circuit de radiateurs (2). Dans cet exemple de réalisation, le circuit sanitaire (7) utilise l'eau emmagasinée dans le chauffe-eau (9). La régulation de cette installation se fait selon les mêmes principes et avec les mêmes composants que dans l'installation reprise à la figure 3.

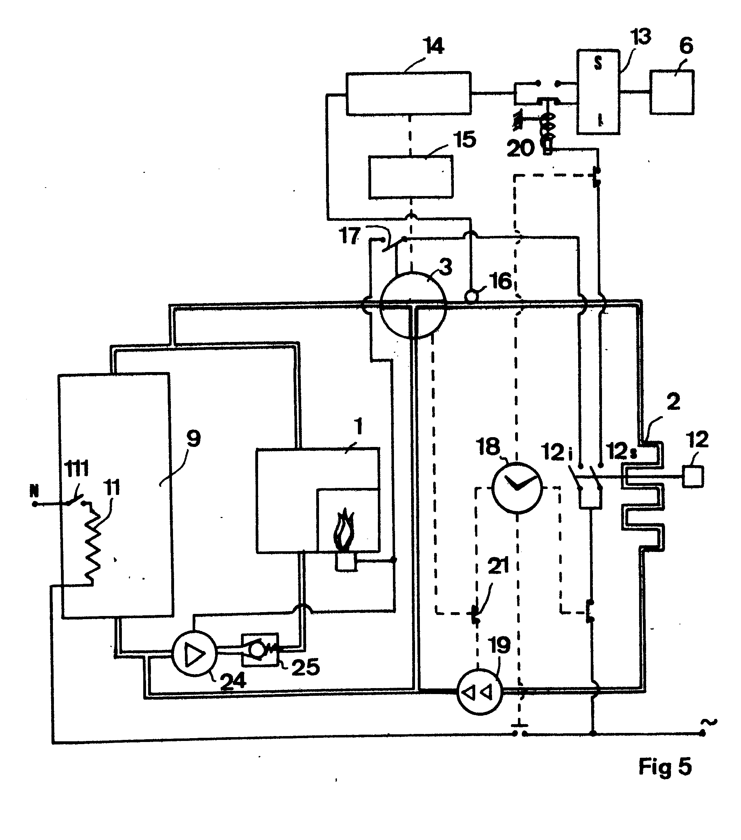

La figure 5 représente une solution mixte, dans laquelle la résistance électrique (10) située à la partie supérieure du chauffe-eau (9) présenté à la figure 3, est remplacée par un générateur thermique classique (1).

Dans cet exemple de réalisation schématisé à la figure 5, le générateur thermique classique (1) est monté en parallèle avec le chauffe-eau (9), équipé d'une résistance électrique (11) montée dans sa partie inférieure, le générateur thermique (1) et le chauffe-eau (9) sont réunis l'un à l'autre par un circuit auxiliaire comprenant un circulateur (24) et une soupape à pression différentielle (25).

L'ensemble de régulation est identique à celui des figures 3 et 4 et opère sur la vanne à trois voies (3) de la même façon que celle présentée pour ces figures.

Pendant le régime de nuit, la résistance électrique (11) chauffe l'eau contenue dans le chauffe-eau (9), le circulateur à deux vitesses (19) tourne en petite vitesse, la vanne d'eau chaude de la vanne à trois voies (3) est en régime inférieur et le thermostat d'ambiance (12) est hors circuit.

Le générateur thermique classique (1) et le circulateur (24) du circuit auxiliaire sont à l'arrêt.

Un certain temps avant la fin du régime du nuit, par exemple une heure avant la fin du régime de nuit, la minuterie (18) met en circuit le thermostat d'ambiance (12), place la vanne d'eau chaude de la vanne à trois voies (3) en régime supérieur et met en grande vitesse le circulateur à deux vitesses (19).

A la fin de la période de nuit, la minuterie coupe l'alimentation en énergie électrique de la résitance (11) du chauffe-eau (9).

Dans les premières heures de la période de jour, l'eau chaude accumulée dans le chauffe-eau (9) suffit pour faire face aux besoins calorifiques du circuit de radiateurs (2).

Lorsque, après un certain temps, le chauffe-eau (9) a épuisé sa réserve d'eau chaude, la température du local témoin descend et le thermostat d'ambiance (12) ferme successivement le contact électrique supérieur (12s), puis le contact électrique inférieur (12i). Dès la fermeture du contact électrique supérieur (12s) du thermostat d'ambiance (12), la vanne d'eau chaude de la vanne à trois voies (3) s'ouvre progressivement: Lorsqu'elle atteint la position totalement ouverte, la vanne d'eau chaude de la vanne à trois voies (3) ferme l'interrupteur de fin de course (17) relié à la fois au générateur thermique classique (1) et au circulateur (24) du circuit auxiliaire. Toutefois, le générateur thermique classique (1) et le circulateur (24) du circuit auxiliaire ne sont démarrés qu'à la fermeture du contact électrique inférieur (12i) du thermostat d'ambiance (12), lorsque la température du local témoin descend sous l'étage inférieur des températures de consigne du thermostat d'ambiance (12).

Dès la mise en marche du circulateur (24), la pression à l'entrée de la soupape à pression différentielle (25) est suffisante pour l'ouvrir et permettre la circulation de l'eau dans le générateur thermique (1) qui se met en fonctionnement. Dans une autre réalisation, le circulateur (24) et la soupape à pression différentielle (25) peuvent être remplacés par une pompe à engrenages ou tout autre dispositif susceptible, lorsqu'il est à l'arrêt, de résister à une surpression.

L'eau chaude produite par le générateur thermique classique (1) est ainsi répartie vers le circuit de radiateurs (2) et vers le chauffe-eau (9) en quantités inversément proportionnelles aux pertes de charges des conduites respectives.

Compte tenu des faibles pertes de charges du circuit auxiliaire réunissant le générateur thermique classique (1) et le chauffe-eau (9), la majeure partie de l'eau réchauffée par le générateur thermique classique (1) va réalimenter le chauffe-eau (9) par sa partie supérieure, respectant ainsi la tendance naturelle dans la disposition des couches chaudes et froides de l'eau, tandis que le reste de l'eau chaude fournie par le générateur thermique (1) alimente le circuit de radiateurs (2). Cette disposition oblige le générateur thermique classique (1) à fonctionner pendant un temps beaucoup plus long que dans une installation classique avant que le thermostat d'ambiance (12) n'ouvre le contact électrique inférieur (12i) pour arrêter le générateur thermique classique (1) et le circulateur (24) du circuit auxiliaire.

D'autre part lorsque le contact électrique inférieur (12i) s'ouvre, le chauffe-eau (9) est bien réalimenté en eau chaude et pourra répondre pendant un certain temps aux besoins calorifiques du circuit de radiateurs (2).

Il s'ensuit que les démarrages du générateur thermique classique (1) sont beaucoup moins nombreux et que la durée de fonctionnement du générateur thermique (1) est beaucoup plus longue que dans une installation classique. Un équilibre thermique peut ainsi se réaliser pour le générateur thermique (1) et participer grandement à l'amélioration de la combustion et à l'augmentation du rendement de l'installation.

D'autres dispositifs de régulation peuvent être appliqués à ces accumulateurs à chaleur par réservoir d'eau.

Dans un autre exemple de réalisation, on peut prévoir que, selon un choix volontaire, la résistance électrique (11) ou le générateur thermique (1) assure la relance pendant le journée. Cette réalisation présente l'avantage de pouvoir utiliser le chauffe-eau (9) comme élément de secours en cas de panne du générateur thermique (1).

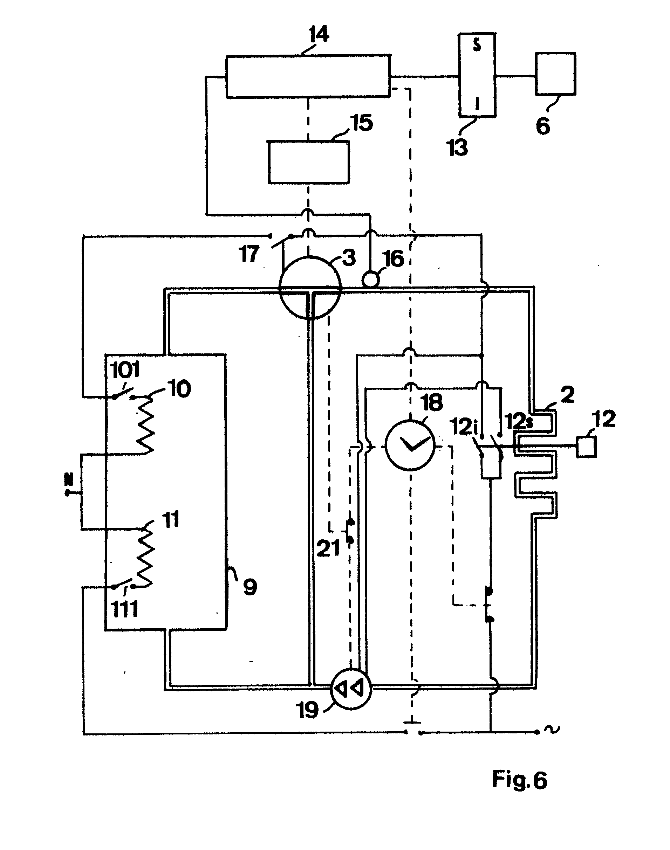

Dans la figure 6, un premier réglage de la température de l'eau circulant dans le circuit de radiateurs (2) est assuré par un thermostat extérieur (6) qui, en fonction de la température extérieure, agit sur l'ouverture de la vanne d'arrivée d'eau chaude de la vanne à trois voies (3). Un second réglage de la température de l'eau circulant dans le circuit de radiateurs (2) est assuré par un thermostat d'ambiance (12) qui, en fonction de la température du local témoin, règle la vitesse de rotation d'un circulateur à plusieurs vitesses (19).

Dans le schéma de la figure 6, le rôle joué par la minuterie reste identique à celui décrit dans les figures 3, 4 et 5.

On peut aussi envisager une régulation simplifiée de l'installation dans laquelle la vanne à trois voies (3) est remplacée par deux vannes à pression différentielle distinctes, placées respectivement à la sortie du chauffe-eau (9) et dans la branche de dérivation de l'installation.

Lorsque, dans cette installation, non représentée, la température du local témoin est plus élevée que le niveau supérieur des températures de consigne du thermostat d'ambiance, le circulateur à plusieurs vitesses est mis à l'arrêt et les vannes à pression différentielles sont fermées. Lorsque la température du local témoin est comprise entre les deux niveaux de température de consigne du thermostat d'ambiance, le circulateur est en petite vitesse et seule la vanne à pression différentielle placée dans la dérivation est ouverte.

Lorsque la température du local témoin est en dessous du niveau inférieur des températures de consigne du thermostat d'ambiance, le circulateur est en grande vitesse et les deux vannes à pression différentielle sont ouvertes.

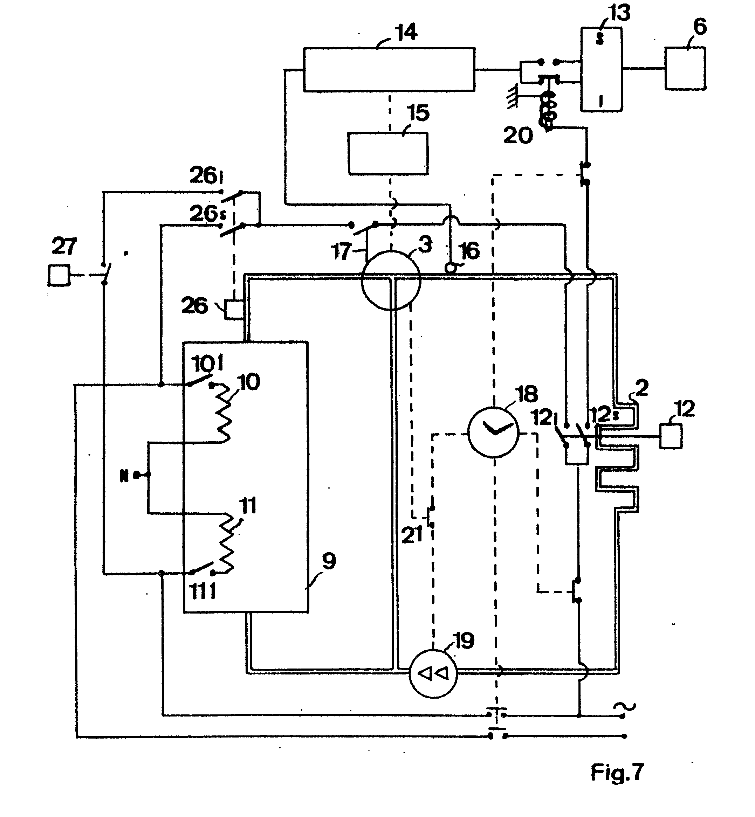

La figure 7 représente une installation équipée d'un thermostat (26) à deux niveaux de température de consigne (26i et 26s) distantes l'une de l'autre d'au moins dix degrés centigrades. Le but de ce thermostat (26) est de limiter au maximum la relance durant la période de jour en fractionnant la puissance de chauffe des chauffe-eau (9).

Ce thermostat (26) est mis en service uniquement pour la période de jour. Pour percevoir la température atteinte par l'eau à la sortie du chauffe-eau (9), il est placé soit dans la partie supérieure du chauffe-eau (9) soit sur la tuyauterie de sortie comme représenté dans cette figure 7.

Lorsque la température mesurée par le thermostat (26) est supérieure à la température de consigne supérieure (26s), la résistance électrique supérieure (10) et la résistance électrique inférieure (11) ne sont pas alimentées en énergie électrique.

Dès qu'en période de jour, la température mesurée par le thermostat (26) devient inférieure à la température de consigne supérieure (26s), la résistance électrique supérieure (10) est alimentée. Lorsque, dans la journée, la température mesurée par le thermostat (26) descend encore et devient inférieure à la température de consigne inférieure (26i), la résistance électrique inférieure (11) est alimentée à son tour.

Toutefois, afin d'éviter des pointes de consommation d'énergie électrique trop importantes, un système de verouillage (27) empêche, durant la période de jour, le fonctionnement simultané de la résistance électrique inférieure (11) et d'un autre appareil ménager de forte puissance, tel que four, cuisinière, machine à laver, ...

Il est évident que l'on peut placer le thermostat (26) et le système de verrouillage (27) dans d'autres installations, telles que celles représentées, par exemple, dans les figures 4 et 6.

De façon à éviter à l'intérieur du chauffe-eau (9) des surchauffes locales et la vaporisation d'une certaine quantité de chaleur, les résistances électriques (10 et 11) sont respectivement alimentées par l'intermédiaire d'un limiteur de température (101 et 111) qui coupe l'alimentation en énergie électrique lorsque la température relevée par un bulbe, non représenté, placé à proximité de chaque résistance électrique mesure une température supérieure à la limite choisie.

## Revendications

1. Installation de chauffage par accumulation de chaleur dans un réservoir d'eau constitué d'au moins un chauffe-eau (9) contenant au moins une résistance électrique (11) et alimentant directement un circuit de radiateurs (2) comprenant une vanne réglable à trois voies (3), un circulateur à plusieurs vitesses (19), un thermostat sensible à la température extérieure (6), un thermostat d'ambiance (12) et une minuterie (18) permettant l'alimentation de nuit de la résistance (11) du chauffe-eau (9),

caractérisée en ce que le thermostat d'ambiance (12) comporte deux étages de température de consigne dénommés respectivement contact électrique supérieur (12s) et contact électrique inférieur (12i)

et en ce qu'un moyen de chauffage additionnel (101) est alimenté par le réseau lorsque, à la fois, le contact électrique inférieur (12i) du thermostat d'ambiance (12) est fermé, traduisant ainsi une température trop basse dans le local témoin, et un interrupteur de fin de course (17) disposé sur la vanne d'arrivée d'eau chaude de la vanne à trois voies (3) est fermé, traduisant ainsi l'ouverture totale de la dite vanne d'arrivée d'eau chaude.

2. Installation de chauffage selon la revendication 1, caractérisée en ce que le moyen de chauffage additionnel est une résistance électrique (10) située dans la partie supérieure du chauffe-eau (9).

3. Installation de chauffage selon la revendication 1, caractérisée en ce que le moyen de chauffage additionnel est un générateur thermique (1) monté dans une branche du circuit disposée en parallèle avec celle du chauffe-eau (9) et comportant un circulateur (24) et une vanne à pression différentielle (25).

4. Installation de chauffage selon la revendication 2, caractérisée en ce qu'à la sortie du chauffe-eau (9) est installé un thermostat (26) comportant deux étages de température de consigne dénommés respectivement température de consigne supérieure (26s) et température de consigne inférieure (26i), en ce que la résistance électrique (10) située à la partie supérieure du chauffe-eau (9) est alimentée par le réseau en période de jour lorsque, à la fois, le contact électrique inférieur (12i) du thermostat d'ambiance (12) est fermé, l'interrupteur de fin de course (17) de la vanne à trois voies (3) est fermé et lorsque la température mesurée par le dit thermostat (26) devient inférieure à la température de consigne supérieure (26s) et en ce que la résistance électrique (11) située à la partie inférieure du chauffe-eau (9) est alimentée par le réseau, en période de jour, lorsque, à la fois, le contact électrique inférieur (12i) du thermostat d'ambiance (12) est fermé, l'interrupteur de fin de course (17) de la vanne à trois voies (3) est fermé et lorsque la température mesurée par le dit thermostat (26) devient inférieure à la température de consigne inférieure (26i).

5. Installation de chauffage selon une des revendications précédentes, caractérisée en ce qu'un générateur de fonction (13) engendre une double relation linéaire entre la température extérieure enregistrée par le thermostat extérieur (6) et une température de consigne de l'eau, à la sortie de la vanne à trois voies (3), une première relation linéaire dite relation linéaire supérieure (13s) correspond au régime pour lequel l'ouverture de la vanne d'eau chaude de la vanne à trois voies (3) peut être totale, une seconde relation linéaire dite relation linéaire inférieure (13i) correspond au régime pour lequel la fermeture de la vanne d'eau chaude de la vanne à trois voies (3) peut être totale, en ce que la sélection entre les deux relations linéaires du générateur de fonctions (13) est faite par un contacteur (20) commandé par le contact électrique supérieur (12s) du thermostat d'ambiance (12), la relation linéaire inférieure (13i) correspondant au contact électrique supérieur (12s) ouvert et la relation linéaire supérieure (13s) corrrespondant au contact électrique supérieur (12s) fermé, et en ce que la température de l'eau mesurée à la sortie de la vanne à trois voies (3) par le thermomètre (16) et la température de consigne issue du générateur de fonction (13) sont comparées dans un comparateur (14) qui commande un moteur (15) actionnant la vanne d'eau chaude de la vanne à trois voies (3).

6. Installation de chauffage selon une des revendications précédentes, caractérisée en ce que la minuterie (18) commande la vitesse de rotation du circulateur à plusieurs vitesses (19), l'enclenchement du thermostat d'ambiance (12) la position de la vanne à trois voies (3) et l'alimentation des résistances électriques (10, 11) du chauffe-eau (9), selon un programme horaire établi en fonction des périodes de jour et de nuit.

7. Installation de chauffage selon une des revendications précédentes, caractérisée en ce qu'un contacteur (21) met hors circuit le circulateur à plusieurs vitesses (19) lorsque, sous l'action combinée du thermostat d'ambiance (12) et du thermostat extérieur (6), l'arrivée d'eau chaude de la vanne à trois voies (3) est fermée complètement.

8. Installation de chauffage selon une des revendications précédentes, caractérisée en ce qu'un système de verrouillage (27) empêche, en période de jour, l'alimentation simultanée, en énergie électrique, de la résistance (11) placée dans la partie inférieure du chauffe-eau (9) et d'un appareil ménager de forte puissance.

9. Installation de chauffage selon la revendication 2, caractérisée en ce que la vanne à trois voies (3) est remplacée par deux vannes à pression différentielle, la première vanne à pression différentielle étant montée dans la branche de dérivation, la seconde vanne à pression différentielle étant montée à la sortie du chauffe-eau (9), en ce que la première vanne à pression différentielle, installée dans la branche de dérivation, est ouverte lorsque le circulateur à plusieurs vitesses (19) fonctionne en petite vitesses suite à la fermeture du contact électrique supérieur (12s) du thermostat d'ambiance (12), en ce que la deuxième vanne à pression différentielle, installée à la sortie du chauffe-eau (9), est ouverte lorsque le circulateur à plusieus vitesses (19) fonctionne en grande vitesse suite à la fermeture du contact électrique inférieur (12i) du thermostat d'ambiance (12) et en ce que, pendant la journée, une résistance électrique (10) située à la partie supérieure du chauffe-eau (9) est alimentée suite à la fermeture du contact électrique inférieur (12i) du thermostat d'ambiance (12).

## Patentansprüche

1. Heizungsanlage mit Wärmespeicherung in einem Wasservorratsbehälter, aus mindestens einem Wassererhitzer (9), der mindestens einen elektrischen Widerstand (11) aufweist und unmittelbar einen Heizkörperkreis (2) versorgt, der ein einstellbares Dreiwegeventil (3), eine Umwälzpumpe mit mehreren Geschwindigkeiten (19), einen gegenüber der Außentemperatur empfindlichen Thermostaten (6), einen Raumthermostaten (12) und eine Schaltuhr (18) zur Einschaltung des Widerstandes (11) des Wassererhitzers (9) während der Nacht enthält, dadurch gekennzeichnet, daß der Raumthermostat (12) zwei Solltemperaturstufen aufweist, die oberer elektrischer Kontakt (12s) und unterer elektrischer Kontakt (12i) genannt werden, und daß ein zusätzliches Heizmittel (10,1) über das Netz versorgt wird, wenn der untere elektrische Kontakt (12i) des Raumthermostaten (12) geschlossen ist, wodurch eine zu niedrige Temperatur in dem Kontrollraum zum Ausdruck gebracht wird, und außerdem zugleich ein auf dem Warmwasserzuführungsventil des Dreiwegeventils (3) angeordneter Endschalter (17) geschlossen ist, wodurch die vollständige Öffnung des besagten Warmwasserzuführungsventils zum Ausdruck gebracht wird.

2. Heizungsanlage gemäß Anspruch 1, dadurch gekennzeichnet, daß das zusätzliche Heizmittel ein elektrischer Widerstand (10) ist, der in dem oberen Teil des Wassererhitzers (9) angeordnet ist.

3. Heizungsanlage gemäß Anspruch 1, dadurch gekennzeichnet, daß das zusätzliche Heizmittel ein Wärmeerzeuger (1) ist, der in einem Zweig des Kreises liegt, der parallel zu dem Zweig des Wassererhitzers (9) angeordnet ist und außerdem eine Umwälzpumpe (24) und ein Differentialdruckventil (25) enthält.

4. Heizungsanlage gemäß Anspruch 2, dadurch gekennzeichnet, daß am Ausgang des Wassererhitzers (9) ein Thermostat (26) angeordnet ist, der zwei Solltemperaturstufen aufweist, die obere Solltemperatur (26s) bzw. untere Solltemperatur (26i) genannt werden, daß der in dem oberen Teil des Wassererhitzers (9) gelegene elektrische Widerstand (10) während des Tages über das Netz versorgt wird, wenn der untere elektrische Kontakt (12i) des Raumthermostaten (12) geschlossen ist, und zugleich der Endschalter (17) des Dreiwegeventils (3) geschlossen ist, und außerdem die von dem besagten Thermostaten (26) gemessene Temperatur unter die obere Sollwerttemperatur (26s) absinkt, und daß der in dem unteren Teil des Wassererhitzers (9) gelegene elektrische Widerstand (11) während des Tages über das Netz versorgt wird, wenn der untere elektrische Kontakt (12i) des Raumthermostaten (12) geschlossen ist und zugleich der Endschalter (17) des Dreiwegeventils (3) geschlossen ist, und außerdem die von dem besagten Thermostaten (26) gemessene Temperatur unter die untere Solltemperatur (26i) absinkt.

5. Heizungsanlage gemäß einem der vorhergehenden Ansprüche, dadurch gekennzeichnet, daß ein Funktionsgenerator (13) eine doppelte lineare Beziehung zwischen der von dem Außenthermostaten (6) gemessenen Außentemperatur und einer Solltemperatur des Wassers am Ausgang des Dreiwegeventils (3) erzeugt, wobei eine erste lineare Beziehung, die obere lineare Beziehung (13s) genannt wird, dem Betriebszustand entspricht, bei dem das Warmwasserventil des Dreiwegeventils (3) vollständig geöffnet sein kann, und eine zweite lineare Beziehung, die untere lineare Beziehung (13i) genannt wird, dem Betriebszustand entspricht, bei dem das Warmwasserventil des Dreiwegeventils (3) vollständig geschlossen sein kann, und daß die Wahl zwischen den zwei linearen Beziehungen des Funktionsgenerators (13) über ein Schütz (20) erfolgt, das über den oberen elektrischen Kontakt (12s) des Raumthermostaten (12) gesteuert wird, wobei die untere lineare Beziehung (13i) dem offenen oberen Kontakt (12s), und die obere lineare Beziehung (13s) dem geschlossenen oberen elektrischen Kontakt (12s) entspricht, und daß die am Ausgang des Dreiwegeventils (3) von dem Thermometer (16) gemessene Temperatur des Wassers und die von dem Funktionsgenerator (13) gelieferte Solltemperatur in einem Komparator (14) miteinander verglichen werden, der einen Motor (15) steuert, der wiederum das Warmwasserventil des Dreiwegeventils (3) betätigt.

6. Heizungsanlage gemäß einem der vorhergehenden Ansprüche, dadurch gekennzeichnet, daß die Schaltuhr (18) die Rotationsgeschwindigkeit der Umwälzpumpe mit mehreren Geschwindigkeiten (19), die Einschaltung des Raumthermostaten (12), die Position des Dreiwegeventils (3) und die Versorgung der elektrischen Widerstände (10, 11) des Wassererhitzers (9) gemäß einem entsprechend den Tages- und Nachtperioden bemessenen zeitlichen Programm steuert.

7. Heizungsanlage gemäß einem der vorhergehenden Ansprüche, dadurch gekennzeichnet, daß ein Schütz (21) die Umwälzpumpe mit mehreren Geschwindigkeiten (19) außer Betrieb setzt, wenn infolge der kombinierten Wirkung des Raumthermostaten (12) und des Außenthermostaten (6) das Warmwasserventil des Dreiwegeventils (3) vollständig geschlossen ist.

8. Heizungsanlage gemäß einem der vorhergehenden Ansprüche, dadurch gekennzeichnet, daß ein Verriegelungssystem (27) während des Tages die gleichzeitige Versorgung des in dem unteren Teil des Wassererhitzers (9) gelegenen Widerstandes (11) und eines leistungsstarken Haushaltsgerätes mit elektrischer Energie verhindert.

9. Heizungsanlage gemäß Anspruch 2, dadurch gekennzeichnet, daß das Dreiwegventil (3) durch zwei Differentialdruckventile ersetzt wird, wobei das erste Differentialdruckventil in dem Abzweigkreis angeordnet wird und das zweite Differentialdruckventil am Ausgang des Wassererhitzers (9) angeordnet wird, daß das in dem Abzweigkreis angeordnete erste Differentialdruckventil geöffnet ist, wenn die Umwälzpumpe mit mehreren Geschwindigkeiten (19) infolge Schließung des oberen elektrischen Kontaktes (12s) des Raumthermostaten (12) mit niedriger Geschwindigkeit läuft, daß das am Ausgang des Wassererhitzers (9) angeordnete zweite Differentialdruckventil geöffnet ist, wenn die Umwälzpumpe mit mehreren Geschwindigkeiten (19) infolge Schließung des unteren elektrischen Kontaktes (12i) des Raumthermostaten (12) mit hoher Geschwindigkeit läuft, und daß während des Tages ein in dem oberen Teil des Wassererhitzers (9) gelegener elektrischer Widerstand (10) infolge Schließung des unteren elektrischen Kontaktes (12i) des Raumthermostaten (12) eingeschaltet wird.

**Claims**

1. Heating system with heat storage in a water tank constituted by at least one water heater (9) containing at least one electrical resistor (11) and directly supplying a circuit of radiators (2) comprising an adjustable three-way valve (3), a multi-speed circulating pump (19), a thermostat sensitive to the external temperature (6), a room thermostat (12) and a timer (18) allowing night supply to the resistor (11) of the water heater (9), characterised in that the room thermostat (12) comprises two desired value temperature stages respectively denoted the upper electrical contact (12s) and the lower electrical contat (12i), and in that an additional heating means (101,1) is supplied by the mains when, at the same time, the lower electrical contact (12i) of the room thermostat (12) is closed, thus representing too low a temperature in the reference chamber or room, and an end-of-travel switch (17) arranged on the hot water inlet valve of the three-way valve (3) is closed, thus representing the full opening of the said hot water inlet valve.

2. Heating system according to claim 1, characterised in that the additional heating means is an electrical resistor (10) situated in the upper portion of the water heater (9).

3. Heating system according to claim 1, characterised in that the additional heating means is a thermogenerator (1) arranged in a branch of the circuit which is in parallel with that of the water heater (9) and comprising a circulating pump (24) and a differential pressure valve (25).

4. Heating system according to claim 2, characterised in that at the outlet of the water heater (9) there is fitted a thermostat (26) comprising two desired value temperature stages denoted respectively the upper desired value temperature (26s) and lower desired value temperature (26i), in that the electrical resistor (10) situated at the upper portion of the water heater (9) is supplied by the mains during the day when, at the same time, the lower electrical contact (12i) of the room thermostat (12) is closed, the end-of-travel switch (17) of the three-way valve (3) is closed and when the temperature measured by the said thermostat (26) goes below the upper desired value temperature (26s), and in that the electrical resistor (11) situated at the lower portion of the water heater (9) is supplied by the mains, during the day, when, at the same time, the lower electrical contact (12i) of the room thermostat (12) is closed, the end-of-travel switch (17) of the three-way valve (3) is closed, and when the temperature measured by the said thermostat (26) becomes less than the lower desired value temperature (26i).

5. Heating system according to one of the preceding claims, characterised in that a function generator (13) produces a double linear relation between the external temperature recorded by the external thermostat (6) and a desired value temperature for the water, at the outlet of the three-way valve (3), a first linear relation called the upper linear relation (13s) corresponds to the operating condition for which the opening of the hot water valve of the three-way valve (3) may be total, a second linear relation called the lower linear relation (13i) corresponds to the operating condition wherein the closing of the hot water valve of the three-way valve (3) may be total, in that the selection between the two linear relations of the function generator (13) is effected by a control switch (20) controlled by the upper electrical contact (12s) of the room thermostat (12), the lower linear relation (13i) corresponding to the upper electrical contact (12s) open and the upper linear relation (13s) corresponding to the upper electrical contact (12s) closed, and in that the temperature of the water measured at the outlet of the three-way valve (3) by the thermometer (16) and the desired value temperature issued by the function generator (13) are compared in a comparator (14) which controls a motor (15) operating the hot water valve of the three-way valve (3).

6. Heating system according to one of the preceding claims, characterised in that the timer (18) controls the rotational speed of the multi-speed circulating pump (19), the engagement of the room thermostat (12) the position of the three-way valve (3) and the supplying of the electrical resistors (10, 11) of the water heater (9), in accordance with a time programme established in accordance with day and night periods.

7. Heating system according to one of the preceding claims, characterised in that a control switch (21) cuts out the multi-speed circulating pump (19) when, under the combined action of the room thermostat (12) and the external thermostat (6), the hot water inlet of the three-way valve (3) is fully closed.

8. Heating system according to one of the preceding claims, characterised in that a locking system (27) during the day prevents the simultaneous supplying of electrical energy to the resistor (11) situated in the lower portion of the water heater (9) and to a high-powered domestic appliance.

9. Heating system according to claim 2, characterised in that the three-way valve (3) is replaced by two differential-pressure valves, the first differential-pressure valve being arranged in the bypass branch, the second differential-pressure valve being arranged at the outlet of the water heater (9), in that the first differential-pressure valve arranged in the bypass branch is open when the multi-speed circulating pump (19) operates at a low speed following the closing of the upper electrical contact (12s) of the room thermostat (12), in that the second differential-pressure valve arranged at the outlet of the water heater (9) is open when the multi-speed circulating pump (19) operates at high speed following the closing of the lower electrical contact (12i) of the room thermostat (12) and in that during the day an electrical resistor (10) arranged at the upper portion of the water heater (9) is supplied following the closing of the lower electrical contact (12i) of the room thermostat (12).

Fig. 1

Fig. 2

Fig. 3

Fig.4

Fig 5

Fig.6

0 035 486

Fig.7

21